# EUROPEAN PATENT APPLICATION

(11) **EP 3 675 419 A1**
(43) Date of publication of application: **01.07.2020**
(21) Application number: 18848871.2
(22) Date of filing: 22.08.2018
(51) Int. Cl.: H04L 12/24, H04L 12/26

(54) **METHOD AND APPARATUS FOR DETECTING NETWORK FAULT**

(30) Priority: 22.08.2017 CN 201710724071
(71) Applicant: ZTE Corporation, Shenzhen, Guangdong 518057 (CN)
(72) Inventor: SHI, Fenyi, Shenzhen Guangdong 518057 (CN)
(74) Representative: Blumbach · Zinngrebe Patentanwälte PartG mbB
(86) International application number: PCT/CN2018/101700
(87) International publication number: WO 2019/037738

(57) **Abstract**

Embodiments of the present disclosure provide a method and a device for detecting a network failure. The method for detecting a network failure includes: constructing a detection message according to start and end addresses of a failed flow path; sending the detection message to a device to be detected corresponding to the start address in the failed flow path; sending, by the device to be detected corresponding to the start address, the detection message to a next device to be detected in the failed flow path until the detection message is sent to a device to be detected corresponding to the end address; acquiring a detection result message corresponding to the failed flow path; and determining a cause of the failure of the failed flow path according to the detection result message.

## Description

### TECHNICAL FIELD

The present disclosure relates to, but is not limited to, the field of communication technologies.

### BACKGROUND

Software Defined Network (SDN) is a kind of new network architecture, and is an implementation manner of network virtualization. The SDN can separate control right of network devices, and the network devices are managed by a centralized controller without relying on underlying network devices (e.g., routers, switches, firewalls), thus differences from the underlying network devices are shielded. The control right is completely open, and a user can customize any network routing and transmission rule strategy to be realized, so that it is more flexible and intelligent.

The underlying network devices are used as forwarding devices, and data packets are matched with a flow table and forwarded after entering the underlying network devices. The flow table, as a basis of data forwarding, mainly includes a match domain, an instruction set, a counter and the like. After entering a switch, the data packets will match flow table entries in the flow table, and data packets matching to a same flow table is called a data flow. After the data packet matching is successful, related instructions are executed to complete data processing, thereby realizing the data forwarding.

Data flow forwarding relies on sequential matching of multiple-layer flow tables to implement transmission from one network device to another. When a network device fails, the data flow cannot be matched with a corresponding flow table entry, so that the corresponding data flow is directly reported to a controller for processing. Because the controller itself does not have a capability of analyzing a failure, but simply forwards the data packets, a network administrator needs to locate flow tables through which the data flow passes to find out a specific position of a failed network device, and further to find out a cause of the failure, for example, flow table being not issued, flow table being issued incorrectly, a port being closed, and so on. When there are not many flow tables and few network devices, the above failure location method may be adopted. However, when tens of thousands of flow table data exist on switches, the above failure location method is time-consuming, labor-consuming and inefficient, and will affect normal use of users.

### SUMMARY

According to an aspect of embodiments of the present disclosure, a method for detecting a network failure is provided, which includes: constructing a detection message according to start and end addresses of a failed flow path; sending the detection message to a device to be detected corresponding to the start address in the failed flow path; sending, by the device to be detected corresponding to the start address, the detection message to a next device to be detected in the failed flow path until the detection message is sent to a device to be detected corresponding to the end address; acquiring a detection result message corresponding to the failed flow path, wherein the detection result message is obtained by respective devices to be detected according to a detection flow table and the detection message; and determining a cause of the failure of the failed flow path according to the detection result message.

Accordance to another aspect of the embodiments of the present disclosure, an SDN controller is also provided, which includes: a detection message generation module configured to: construct a detection message according to start and end addresses of a failed flow path, and send the detection message to a device to be detected corresponding to the start address in the failed flow path, so that the device to be detected corresponding to the start address sends the detection message to a next device to be detected in the failed flow path until the detection message is sent to a device to be detected corresponding to the end address; and a detection message collection and analysis module configured to: acquire a detection result message corresponding to the failed flow path, wherein the detection result message is obtained by respective devices to be detected according to a detection flow table and the detection message, and determine a cause of the failure of the failed flow path according to the detection result message.

According to yet another aspect of the embodiments of the present disclosure, an SDN controller is also provided, which includes a memory and a processor, where a computer program is stored in the memory, and when the computer program is executed by the processor, the processor executes the steps of the method for detecting a network failure according to the present disclosure.

According to still yet another aspect of the embodiments of the present disclosure, there is also provided a computer-readable storage medium having a computer program stored thereon, which when executed by a processor, the processor performs the steps of the method for detecting a network failure according to the present disclosure.

### BRIEF DESCRIPTION OF DRAWINGS

The accompanying drawings are included to provide a further understanding of the embodiments of the present disclosure, constitute a part of this specification, illustrate the present disclosure together with the embodiments of the present disclosure and are not intent to limit the present disclosure. In the drawings:
Fig. 1 is a diagram of networking based on SDN controller;
Fig. 2 is a flow chart of a method for detecting a network failure according to an embodiment of the present disclosure;
Fig. 3 shows a multi-level flow tables processing diagram of an OpenFlow switch;
Fig. 4 is a flow chart of an example of the method for detecting a network failure according to an embodiment of the present disclosure;
Fig. 5 is a schematic structural diagram of an SDN controller according to an embodiment of the present disclosure; and
Fig. 6 is a schematic structural diagram of an SDN controller according to another embodiment of the present disclosure.

### DETAILED DESCRIPTION

In order to make the technical solution of the present disclosure clearer, the following detailed description is made with reference to the accompanying drawings and specific embodiments.

The terms "first," "second," and the like in the description and in the claims of the present disclosure are used for distinguishing between similar elements and not necessarily for describing a particular sequence or chronological order. It is to be understood that the numbers used like this are interchangeable under appropriate circumstances and the embodiments described herein are capable of operation in sequences other than those illustrated or described.

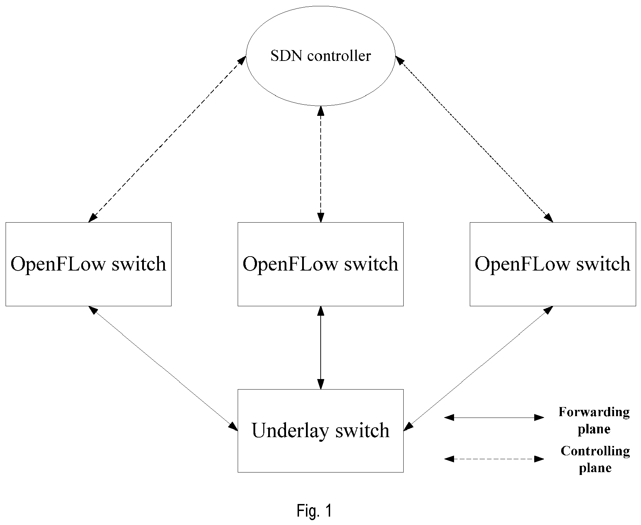

Fig. 1 is a diagram of networking based on SDN controller. As shown in Fig. 1, data forwarding and routing control of an SDN controller are separated. And the SDN controller is used for managing and controlling all OpenFlow switches in the networking in a centralized manner, and the OpenFlow switches are used for forwarding in data layers. The OpenFlow switch forwarding planes are connected through underlay links. The SDN controller can automatically discover and update the link topology among devices in real time, and can also issue a flow table to a required communication device according to a requirement.

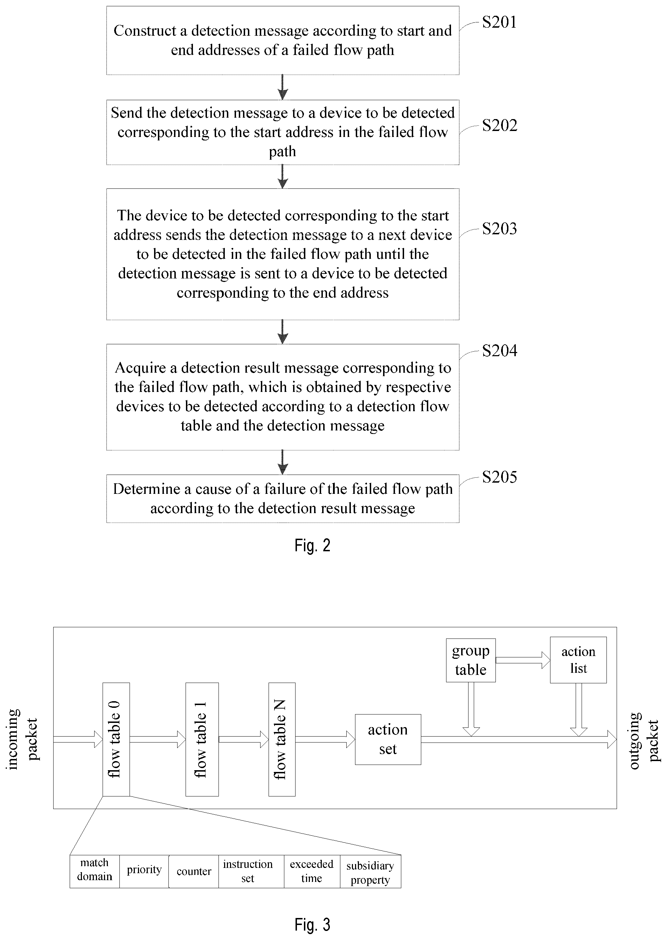

Fig. 2 is a flow chart of a method for detecting a network failure according to an embodiment of the present disclosure.

Referring to Fig. 2, the method for detecting a network failure according to an embodiment of the present disclosure may include steps S201 to S205.

In step S201, a detection message is constructed according to start and end addresses of a failed flow path.

In step S202, the detection message is sent to a device to be detected corresponding to the start address in the failed flow path.

In step S203, the device to be detected corresponding to the start address sends the detection message to a next device to be detected in the failed flow path until the detection message is sent to a device to be detected corresponding to the end address.

The start address may be an address of any one of terminal devices under a start switch of the failed flow path, and the end address may be an address of any one of terminal devices under an end switch of the failed flow path.

The detection message may include, but is not limited to: an Internet Control Message Protocol (ICMP) message, a Transmission Control Protocol (TCP) message, a User Datagram Protocol (UDP) message, and other Protocol messages.

According to an embodiment of the present disclosure, an ICMP message may be constructed according to the start address and the end address, and the ICMP message may be sent to the device to be detected corresponding to the start address in the failed flow path in a packet out manner.

In an embodiment of the present disclosure, the priority of the detection flow table is lower than that of an expected flow table, which is a flow table that the device to be detected should have when the communication is normal. After receiving the detection message, a switch firstly matches the detection message with an expected flow table with high priority, and if the detection message is not matched with the expected flow table, the switch matches the detection message with the detection flow table. An instruction set of the detection flow table may write a matching result of the detection flow table and the detection message into the detection message to form a detection result message.

Fig. 3 shows a multi-level flow tables processing diagram of an OpenFlow switch.

Referring to Fig. 3, there are a plurality of devices to be detected corresponding to the start address to the end address, and each device to be detected corresponds to one or more detection flow tables and expected flow tables. Flow table numbers of the detection flow tables and the expected flow tables corresponding to the device to be detected are from 0 to N, and the device to be detected corresponding to the start address is an entrance for the detection message. The detection message is firstly matched with a match domain of an expected flow table having the flow table number of 0, and if the expected flow table having the flow table number of 0 does not match the detection message, the switch matches the detection message with a detection flow table having the flow table number of 0. An instruction set of the detecting the flow table can write the matching result of the detection message and the detection flow table having the flow table number of 0 into the detection message, and forward the detection message to an expected flow table having the flow table number of 1 according to the instruction set of detecting the flow table, so as to match the detection message with a detection flow table or an expected flow table having the flow table number of 1. If the expected flow table having the flow table number 1 can completely match the detection message, the detection message may be directly forwarded to a next expected flow table (i.e., an expected flow table having the flow table number of 2) for matching until the detection message is forwarded to an expected flow table having the flow table number of N. A detection result message is formed by writing mismatch information between the detection message and one or more detection flow tables corresponding to a device to be detected into the detection message. The detection result message is reported to an SDN controller, and a cause of the failure of the failed flow path is determined by the SDN controller according to mismatch information between the detection message and detection flow tables of all the devices to be detected.

Continuing to refer to Fig. 3, if all of the expected flow tables having the flow table numbers from 0 to N of the device to be detected completely match the detection message, the detection message is forwarded to a device to be detected next to the detected device for matching, and then sequentially match the detection message with expected flow tables having the flow table numbers from 0 to N of the next device to be detected.

In step S204, a detection result message corresponding to the failed flow path is obtained. The detection result message is obtained by respective devices to be detected according to the detection flow table and the detection message.

In step S205, a cause of the failure of the failed flow path is determined according to the detection result message.

According to mismatch information between the detection message and detection flow tables respectively corresponding to respective devices to be detected, the cause of the failure of the failed flow path can be analyzed, such as port damage, flow table being not issued and the like.

According to an embodiment of the present disclosure, before step S201, the method for detecting a network failure further includes: determining the start address and the end address of the failed flow path; and sending the detection flow table to the respective devices to be detected in the failed flow path according to the start address and the end address.

The start address may be MAC address and/or IP address of any one of terminal devices under a start switch of the failed flow path, and the end address may be MAC address and/or IP address of any one of terminal devices under an end switch of the failed flow path.

Continuing to refer to Fig. 3, the detection flow table may include a plurality of flow table entries, each of which may include attribute information such as a match domain, a priority, an instruction set, a counter, and the like. The match domain may include match information such as a port, a Virtual Local Area Network (VLAN) value, a source Media Access Control (MAC) address, a destination MAC address, and the like. The priority of a flow entry may be indicated by a numerical value, and the match domains of the flow entries with different priorities may be the same and the instruction sets of the flow entries with different priorities may be different. The instruction set is a set of actions for describing processes performed on the message, such as uploading the message to a controller, forwarding the message to a next flow table entry, writing mismatch information between the detection flow table and the detection message into the detection message, and the like.

The expected flow table also includes a plurality of flow entries, and a flow entry of the expected flow table may also include attribute information such as a match domain, a priority, an instruction set, a counter, and the like. The match domain of the expected flow table is the same as the match field of the detection flow table. The expected flow table differs from the detection flow table in that an action of the instruction set of the expected flow table is simply forwarding the message.

It should be noted that the detection message may be periodically sent to the device to be detected corresponding to the start address in the failed flow path during a failure detection phase. In this way, it is possible to detect the state of the device at the beginning of the failure, and detect the state of the device when the failure is automatically restored or restored by external action.

According to the present disclosure, after step S205, the method for detecting a network failure further includes: marking a failed device on the failed flow path, and displaying the cause of the failure on a topological link; and deleting the detection flow table completely.

By deleting the detection flow table, the user may be prohibited from inputting failure detection information.

In an embodiment of the present disclosure, a cause of the failure can be quickly detected by issuing a detection flow table to failed service flow devices and analyzing the detection result message uploaded to the SDN controller. Compared with a manual failure detection, failure location method for detecting a network failure according to the present disclosure is more efficient. Meanwhile, the method for detecting a network failure can solve end-to-end failures and does not affect normal services of the SDN controller and forwarding devices.

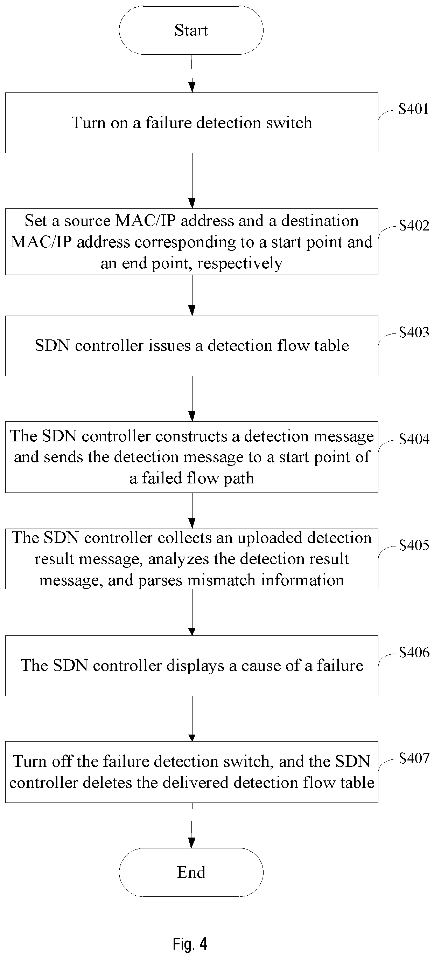

In order to better understand the process of the above-mentioned method for detecting a network failure, the following description is made with reference to Fig. 4. Fig. 4 is a flow chart of an example of the method for detecting a network failure according to an embodiment of the present disclosure.

In an embodiment of the present disclosure, the failure detected by the SDN controller mainly refers to a failure caused by a terminal device under a start point of a flow path and a terminal device under an end point of the flow path. Referring to Fig. 4, this example includes steps S401 to S407.

In step S401, a failure detection switch of an SDN controller is turned on. After the switch of the SDN controller is turned on, relevant operations such as failure diagnosis and the like can be carried out, to allow a user to carry out failure diagnosis configuration.

In step S402, a source MAC/IP address and a destination MAC/IP address corresponding to the start point and the end point of the failure detection are set, respectively. The start point and the end point refer to failed OpenFlow switches on the flow path. The source MAC/IP address refers to the MAC/IP address of the terminal device under the OpenFlow switch at the start point on the failed flow path. The destination MAC/IP address refers to the MAC/IP address of the terminal device under the OpenFlow switch at the end point on the failed flow path.

In step S403, the SDN controller issues the detection flow table on the flow path according to the source MAC/IP address and the destination MAC/IP address set in step S402 respectively corresponding to the start point and the end point.

The priority of the detection flow table may be lower than that of the expected flow table. When the detection message enters a device to be detected, preferentially match the detection message with the expected flow table, and if the detection message does not match the expected flow table, the detection message is matched with the detection flow table. The action of the detection flow table may include forwarding the message to an SDN controller.

In step S404, the SDN controller constructs a detection message and sends the detection message to the start point of the failed flow path. The SDN controller constructs an ICMP message according to the source MAC/IP address and the destination MAC/IP address set in step S401, and then sends the ICMP message to a terminal device port (which serves as an entrance for the detection message) corresponding to a start device (i.e., a start OpenFlow switch) in a packet out manner. After the detection message enters the OpenFlow switch, the OpenFlow switch searches and matches key information in an expected flow table stored in the OpenFlow switch according to the source IP address/destination IP address or the source MAC address/destination MAC address and a protocol type carried by the detection message, and forwards the detection message to an OpenFlow switch of a next node in the service flow path. After receiving the detection message, the OpenFlow switch of the next node continues to match the detection message with the flow table and forward the detection message, and so on until the terminal device under the OpenFlow switch at end point on the service flow path receives the detection message.

It should be noted that, according to an embodiment of the present disclosure, the SDN controller may periodically construct and send the detection message during a failure detection phase.

In step S405, the SDN controller collects an uploaded detection result message in real time, analyzes the detection result message, and parses mismatch information carried in the message.

In step S406, a cause of the failure is determined according to the detection result message, and the cause of the failure is displayed on a topological link.

The failed device can be displayed in high red, and the specific cause of the failure such as port failure, flow table abnormally matched and the like can be displayed, so that a location basis is provided for maintenance worker. When a certain failure result is not sent any more, it indicates that the failure has been solved, so that the failure is no longer displayed in order to achieve a real-time update status.

In step S407, the failure detection switch is turned off. After the failure detection switch of the SDN controller is turned off, all the detection flow tables issued in step S403 need to be deleted to prohibit the user from inputting failure detection information.

In summary, when an end-to-end failure occurs in a forwarding device in an SDN networking environment, a network maintenance worker first makes a detection configuration on an SDN controller, and further confirms a specific cause of the failure occurring in the forwarding device according to a detection result of the SDN controller, so that the efficiency is greatly improved, and location methods are supplemented.

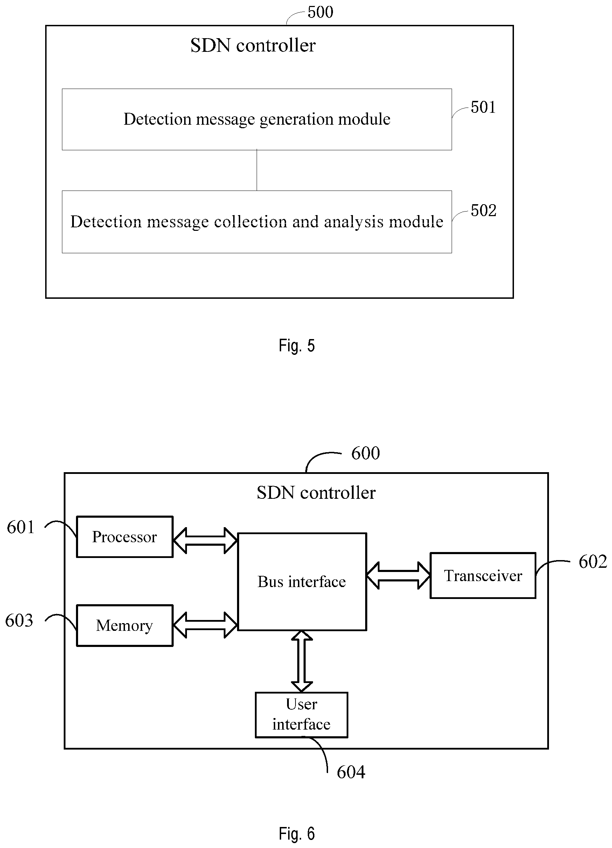

Fig. 5 is a schematic structural diagram of an SDN controller according to an embodiment of the present disclosure.

Referring to Fig. 5, the SDN controller 500 may include a detection message generation module 501 and a detection message collection and analysis module 502.

The detection message generation module 501 is configured to: construct a detection message according to start and end addresses of a failed flow path, and send the detection message to a device to be detected corresponding to the start address in the failed flow path, so that the device to be detected corresponding to the start address sends the detection message to a next device to be detected in the failed flow path until the detection message is sent to a device to be detected corresponding to the end address.

The detection message collection and analysis module 502 is configured to: acquire a detection result message corresponding to the failed flow path, wherein the detection result message is obtained by respective devices to be detected according to a detection flow table and the detection message, and determine a cause of the failure of the failed flow path according to the detection result message.

The detection message generation module 501 may include a first detection message generation unit configured to periodically send the detection message to the device to be detected corresponding to the start address in the failed flow path during a failure detection phase.

The detection message generation module 501 may include a second detection message generation unit configured to: construct an ICMP message according to the start address and the end address, and send the ICMP message to the device to be detected corresponding to the start address in the failed flow path, in a packet out manner.

The detection result message may include mismatch information between the detection message and a detection flow table corresponding to a device to be detected, and the detection message collection and analysis module 502 may include a detection message collection and analysis unit configured to obtain the cause of the failure of the failed flow path according to the mismatch information between the detection message and the detection flow table corresponding to the device to be detected.

According to an embodiment of the present disclosure, the software defined network controller 500 may further include a failure detection setting module, a flow table generation module, a flow table deleting module, and a failure displaying module.

The failure detection setting module is configured to determine the start address and the end address of the failed flow path. The start address may be an address of any one of terminal devices under a start switch of the failed flow path, and the end address may be an address of any one of terminal devices under an end switch of the failed flow path.

The flow table generation module is configured to send the detection flow table to respective devices to be detected in the failed flow path according to the start address and the end address.

The flow table deleting module is configured to delete the detection flow table completely.

The failure displaying module is configured to mark a failed device on the failed flow path and display the cause of the failure on a topological link.

It should be noted that, the software defined network controller according to the embodiments of the present disclosure may implement the method for detecting a network failure according to the embodiments of the present disclosure, which is not described herein again.

Fig. 6 is a schematic structural diagram of an SDN controller according to another embodiment of the present disclosure. As shown in Fig. 6, the SDN controller 600 may include a processor 601, a transceiver 602, a memory 603, a user interface 604, and a bus interface.

A computer program capable of running on the processor 601 may be stored on the memory 603, and when the computer program is executed by the processor 601, the processor 601 may perform the method for detecting a network failure according to embodiments of the present disclosure, which is not described herein again.

In Fig. 6, a bus architecture may include any number of interconnected buses and bridges that link various circuits together, such as one or more processors represented by the processor 601, and one or more memories represented by the memory 603. The bus architecture may also link various other circuits such as peripherals, voltage regulators, power management circuits, and the like. The bus interface provides an interface. The transceiver 602 may be a plurality of elements, i.e., includes a transmitter and a receiver, for providing units for communicating with various other apparatus over transmission medium. The user interface 604 may be various interfaces capable of interfacing with desired devices for different user devices, including but not limited to a keypad, a display, a speaker, a microphone, a joystick, etc.

The processor 601 is used for managing the bus architecture and general processing, and the memory 603 may store data used by the processor 601 in performing operations.

The embodiments of the present disclosure also provide a computer-readable storage medium, on which a computer program is stored, and when the computer program is executed by a processor, the processor may perform the method for detecting a network failure according to the embodiments of the present disclosure, which is not described herein again.

It should be appreciated that reference throughout this specification to "one embodiment" or "an embodiment" means that particular features, structures or characteristics described in connection with the embodiment is included in at least one embodiment of the present disclosure. Thus, the appearances of the phrases "in one embodiment" or "in an embodiment" in various places throughout this specification are not necessarily all referring to a same embodiment. Furthermore, the particular features, structures, or characteristics may be combined in any suitable manner in one or more embodiments.

In various embodiments of the present disclosure, it should be understood that the sequence numbers of the processes do not mean the execution sequence, and the execution sequence of the processes should be determined by the functions and the inherent logic of the processes, and should not constitute any limitation on the implementation process of the embodiments of the present disclosure.

In the embodiments provided herein, it should be understood that "B corresponding to A" means that B is associated with A, and B can be determined from A. It should also be understood that determining B from A does not mean determining B from A alone, but may also be determined from A and/or other information.

In the embodiments provided in the present application, it should be understood that the disclosed method and apparatus may be implemented in other ways. For example, the above described apparatus embodiments are merely illustrative, and for example, the division of the units is only one logical division, and other divisions may be realized in practice, for example, a plurality of units or components may be combined or integrated into another system, or some features may be omitted, or not executed. In addition, the shown or discussed coupling or direct coupling or communication connection may be an indirect coupling or communication connection through some interfaces, devices or units, and may be in an electrical, mechanical or other form.

In addition, functional units in the embodiments of the present disclosure may be integrated into one processing unit, or each unit may be physically included alone, or two or more units may be integrated into one unit. The integrated unit may be realized in a form of hardware, or in a form of hardware plus a software functional unit.

The integrated unit implemented in the form of a software functional unit may be stored in a computer-readable storage medium. The software functional unit is stored in a storage medium and includes several instructions to enable a computer device (which may be a personal computer, a server, or a network-side device) to perform some steps of the method according to various embodiments of the present disclosure. The aforementioned storage medium includes various media capable of storing program codes, such as USB disk, removable hard disk, Read-Only Memory (ROM), Random Access Memory (RAM), magnetic disk, or optical disk.

The foregoing is the embodiments of the present disclosure, and it should be noted that modifications and changes can be made by those skilled in the art without departing from the principle described in the present disclosure, and these modifications and changes should also be considered to be within the scope of the present disclosure.

## Claims

1. A method for detecting a network failure, comprising:
constructing a detection message according to start and end addresses of a failed flow path;
sending the detection message to a device to be detected corresponding to the start address in the failed flow path;
sending, by the device to be detected corresponding to the start address, the detection message to a next device to be detected in the failed flow path until the detection message is sent to a device to be detected corresponding to the end address;
acquiring a detection result message corresponding to the failed flow path, wherein the detection result message is obtained by respective devices to be detected according to a detection flow table and the detection message; and
determining a cause of the failure of the failed flow path according to the detection result message.

2. The method of claim 1, wherein before the step of constructing the detection message according to the start and end addresses, the method further comprises:
determining the start and end addresses of the failed flow path; and
sending the detection flow table to the respective devices to be detected in the failed flow path according to the start and end addresses.

3. The method of claim 2, wherein the step of determining the start and end addresses of the failed flow path comprises:
determining the start address as an address of any one of terminal devices under a start switch of the failed flow path; and
determining the end address as an address of any one of terminal devices under an end switch of the failed flow path.

4. The method of claim 1, wherein the step of sending the detection message to the device to be detected corresponding to the start address in the failed flow path comprises:
periodically sending, during a failure detection phase, the detection message to the device to be detected corresponding to the start address in the failed flow path.

5. The method of claim 1, wherein the step of sending the detection message to the device to be detected corresponding to the start address in the failed flow path comprises:
constructing an Internet Control Message Protocol (ICMP) message according to the start and end addresses; and
sending, in a packet out manner, the ICMP message to the device to be detected corresponding to the start address in the failed flow path.

6. The method of claim 1, wherein the detection result message comprises mismatch information between the detection message and the detection flow table corresponding to the device to be detected, and the step of determining the cause of the failure of the failed flow path according to the detection result message comprises:
obtaining the cause of the failure of the failed flow path according to the mismatch information between the detection message and the detection flow table corresponding to the device to be detected.

7. The method of claim 1, wherein after the step of determining the cause of the failure of the failed flow path according to the detection result message, the method further comprises:
deleting the detection flow table completely.

8. The method of claim 1, wherein after the step of determining the cause of the failure of the failed flow path according to the detection result message, the method further comprises:
marking a failed device on the failed flow path, and displaying the cause of the failure on a topological link.

9. A software defined network controller, comprising:
a detection message generation module configured to: construct a detection message according to start and end addresses of a failed flow path, and send the detection message to a device to be detected corresponding to the start address in the failed flow path, so that the device to be detected corresponding to the start address sends the detection message to a next device to be detected in the failed flow path until the detection message is sent to a device to be detected corresponding to the end address; and
a detection message collection and analysis module configured to: acquire a detection result message corresponding to the failed flow path, wherein the detection result message is obtained by respective devices to be detected according to a detection flow table and the detection message, and determine a cause of the failure of the failed flow path according to the detection result message.

10. The software defined network controller of claim 9, further comprising:
a failure detection setting module configured to determine the start and end addresses of the failed flow path; and
a flow table generation module configured to send the detection flow table to the respective devices to be detected in the failed flow path according to the start and end addresses.

11. The software defined network controller of claim 10, wherein the failure detection setting module is configured to:
determine the start address as an address of any one of terminal devices under a start switch of the failed flow path; and
determine the end address as an address of any one of terminal devices under an end switch of the failed flow path.

12. The software defined network controller of claim 9, wherein the detection message generation module comprises:
a first detection message generation unit configured to periodically send the detection message to the device to be detected corresponding to the start address in the failed flow path during a failure detection phase.

13. The software defined network controller of claim 9, wherein the detection message generation module comprises:
a second detection message generation unit configured to: construct an Internet Control Message Protocol (ICMP) message according to the start and end addresses, and send the ICMP message to the device to be detected corresponding to the start address in the failed flow path, in a packet out manner.

14. The software defined network controller of claim 9, wherein the detection result message comprises mismatch information between the detection message and a detection flow table corresponding to a device to be detected, and the detection message collection and analysis module comprises:
a detection message collection and analysis unit configured to obtain the cause of the failure of the failed flow path according to the mismatch information between the detection message and the detection flow table corresponding to the device to be detected.

15. The software defined network controller of claim 9, further comprising:
a flow table deleting module configured to delete the detection flow table completely.

16. The software defined network controller of claim 9, further comprising:
a failure displaying module configured to mark a failed device on the failed flow path and display the cause of the failure on a topological link.

17. An SDN controller comprising a memory and a processor, wherein the memory stores a computer program which, when executed by the processor, cause the processor to implement the method for detecting a network failure according to any one of claims 1 to 8.

18. A computer-readable storage medium, on which a computer program is stored which, when executed by a processor, cause the processor to implement the method for detecting a network failure according to any one of claims 1 to 8.
